# EUROPÄISCHE PATENTSCHRIFT

(11) **EP 1 891 409 B1**
(45) Veröffentlichungstag und Bekanntmachung des Hinweises auf die Patenterteilung: **01.09.2010**
(21) Anmeldenummer: 06721970.9
(22) Anmeldetag: 23.05.2006
(51) Int. Cl.: G01L 1/16

(54) **DEHNUNGSSENSOR**
ELONGATION SENSOR
DETECTEUR D'ALLONGEMENT

(30) Priorität: 26.05.2005 CH 909052005
(43) Veröffentlichungstag der Anmeldung: 27.02.2008
(73) Patentinhaber: Kistler Holding AG, 8408 Winterthur (CH)
(72) Erfinder: ENGELER, Paul, CH-8500 Frauenfeld (CH); KIRCHHEIM, Andreas, CH-8422 Pfungen (CH); OTTER, Daniel, CH-8311 Brütten (CH); SCHAFFNER, Georges, CH-8335 Hittnau (CH); STAUB, Reinhard, CH-8704 Herrliberg (CH); ULLRICH, Andreas, 70619 Stuttgart (DE)
(86) Internationale Anmeldenummer: PCT/CH2006/000271
(87) Internationale Veröffentlichungsnummer: WO 2006/125335

(56) Entgegenhaltungen:
- EP-A- 0 012 867
- EP-A- 0 459 948
- CH-A5- 687 647
- DE-A1- 4 330 808
- DE-A1- 19 829 410

## Beschreibung

### Technische Gebiet

Die Erfindung betrifft einen Dehnungssensor zum Messen von Dehnungen und Stauchungen an einer Oberfläche eines festen Körpers. Solche Sensoren werden vielerorts industriell eingesetzt, beispielsweise zum Überwachen von Lasten, die auf ein Bauteil wirken.

### Stand der Technik

Dehnungssensoren werden seit langem industriell eingesetzt. Bei solchen Sensoren werden meist ein oder zwei Messelemente, welche Scherkräfte messen können, in einem Gehäuse untergebracht. Dieses Gehäuse wird mit einer Schraube fest, mit etwa 10'000N, auf einer Oberfläche angebracht. Das Gehäuse liegt dabei mit zwei Auflageflächen beidseits beabstandet von der Schraube mit sehr grosser Haftreibung auf dieser Oberfläche auf. Jede Auflagefläche kann mit einem Messelement ausgestattet sein. Durch Dehnung oder Stauchung der Oberfläche im Bereich zwischen diesen beiden Auflageflächen treten an jedem Messelement Scherkräfte auf, die gemessen werden können.

Bekannte Modelle sind beispielsweise der Typ 9233, beschrieben in der EP 0012867, oder der Typ 9232, beide der Firma Kistler Instrumente AG, CH-Winterthur.

Beim Typ 9233 ist das Messelement im Gehäuse eingeschweisst, wodurch das Messelement und die daran angeschlossene Elektronik-Komponente vor äusseren Einflüssen, insbesondere Schmutz, Ölen und Flüssigkeiten, geschützt ist. Dieses Einschweissen ist sehr aufwändig und daher für kleinere Stückzahlen nicht geeignet, da der Sensor sonst sehr teuer wird.

Beim Typ 9232 sind die Messelemente in Kunststoff eingegossen. Diese Herstellung ist sauber, einfach und günstig. Bei hohen Temperaturen ändern sich aber die Dehnungseigenschaften des Kunststoffes, da die Härte nicht temperaturunabhängig ist. Zudem ist der Kunststoff empfindlich auf gewisse chemische Zusammensetzungen der Umgebung und kann in Flüssigkeiten beschädigt werden oder sich teilweise auflösen.

### Darstellung der Erfindung

Aufgabe der vorliegenden Erfindung ist es, einen Dehnungssensor anzugeben, welcher eine auch für Kleinserien einfache und kostengünstige Montage bietet unter Gewährleistung eines sicheren Einschlusses des Messelementes gegenüber Umwelteinflüssen verschiedener Gase und Flüssigkeiten.

Die Aufgabe wird gelöst durch die Kennzeichen des unabhängigen Patentanspruchs.

Die der Erfindung zugrunde liegende Idee besteht darin, dass der erfindungsgemässe Dehnungssensor mindestens ein Modul mit einer Auflagefläche umfasst, in dem das Messelement vormontiert dicht eingeschlossen ist. Dieses Modul wird vorzugsweise derart dichtend in einer Öffnung des Gehäuses angebracht, dass die im Gehäuse untergebrachte Elektronik-Verkabelung von Umwelteinflüssen geschützt ist. Das Modul wird auf einfache Weise am Gehäuse angebracht, sodass es während dem Transport und dem Einbau am Gehäuse gesichert ist.

### Kurze Beschreibung der Zeichnungen

Im Folgenden wird die Erfindung unter Beizug der Zeichnungen näher erklärt. Es zeigen
- Fig. 1: ein Querschnitt durch einen Dehnungssensor Typ 9233 in schematischer Darstellung nach dem Stand der Technik;
- Fig. 2: ein Querschnitt durch einen Dehnungssensor Typ 9232 in schematischer Darstellung nach dem Stand der Technik;
- Fig. 3: ein Querschnitt durch einen erfindungsgemässen Deh- nungssensor in schematischer Darstellung;
- Fig. 4: ein Querschnitt durch ein Modul umfassend ein Mess- element in schematischer Darstellung;
- Fig. 5: schematische Darstellung in Aufsicht einer Anord- nung eines erfindungsgemässen Dehnungssensors mit vier Messelementen.

### Wege zur Ausführung der Erfindung

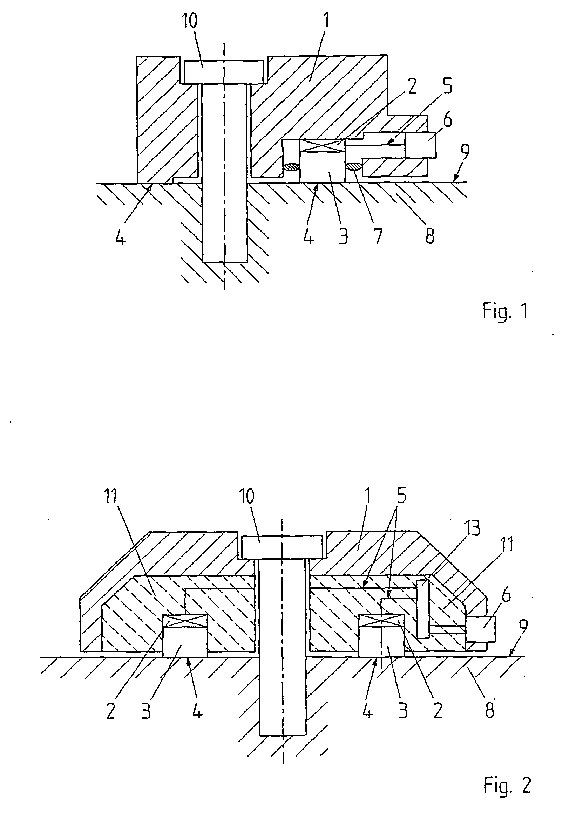

Die Fig. 1 zeigt einen Querschnitt durch einen Dehnungssensor Typ 9233 in schematischer Darstellung nach dem Stand der Technik, montiert auf einer Oberfläche 9 eines Bauteils 8. Dieser Dehnungssensor umfasst ein Gehäuse 1 mit einer Vorrichtung zur Befestigung 10 an diesem Bauteil 8, beispielsweise mittels einer Schraube. Im befestigten Zustand liegt dieser Dehnungssensor an zwei Auflageflächen 4 auf der Oberfläche 9 des Bauteils auf. In diesem Ausführungsbeispiels besteht eine der Auflageflächen 4 aus einem Übertragungselement 3. Ein Messelement 2 ist zwischen dem Übertragungselement 3 und dem Gehäuse 1 angeordnet. Dieses Messelement 2 kann auftretende Scherkräfte messen und das entsprechende Messsignal über eine dafür vorgesehene Verkabelung 5, welche durch das Gehäuse 1 verläuft, zu einem Stecker 6 leiten. An diesem Stecker 6 kann das Signal mit herkömmlichen Mitteln zu einem Auswertegerät geleitet und ausgewertet werden.

Bei einer Stauchung oder Dehnung der Oberfläche 9 des Bauteils verändert sich der Abstand der beiden Auflageflächen 4 des Dehnungssensors. Voraussetzung dafür ist natürlich, dass die Spannkraft der Befestigung 10 stark genug ist, sodass die Auflageflächen 4 stets durch Haftreibung an der Oberfläche 9 des Bauteils haften.

Bei einer Veränderung des Abstandes der beiden Auflageflächen 4 des Dehnungssensors überträgt das Übertragungselement 3 Scherkräfte auf das zwischen dem Gehäuse 1 und dem Übertragungselement 3 eingeklemmte Messelement 2, welches ein entsprechendes Signal über die Verkabelung 5 zum Stecker 6 leitet.

Um das Messelement 2 sowie die Verkabelung 5 von äusseren Einflüssen zu schützen, sowie um das Übertragungselement 3 am Gehäuse 1 anzubringen, wird das Übertragungselement 3 am Gehäuse 1 an einer Schweissstelle 7 angeschweisst. Dadurch entsteht ein geschlossener Innenraum im Gehäuse 1, der von äusseren Einflüssen wie Gasen und/oder Flüssigkeiten geschützt ist.

In diesem Ausführungsbeispiel ist lediglich eine Auflagefläche 4 mit einem Messelement 2 versehen; die andere Auflagefläche 4 ist lediglich ein Dummy 12 und dient entsprechend nur zur Befestigung an der Oberfläche 9 des Bauteils mittels Haftreibung.

Die Fig. 2 zeigt einen Querschnitt durch einen Dehnungssensor Typ 9232 in schematischer Darstellung nach dem Stand der Technik, montiert auf einer Oberfläche 9 eines Bauteils 8. Wie das Ausführungsbeispiel in Fig. 1 verfügt auch diese Ausführung über ein Gehäuse 1, eine Befestigung 10, zwei beabstandete Auflageflächen 4, sowie über eine Verkabelung 5 von jedem Messelement 2 zum Stecker 6. In diesem Ausführungsbeispiel sind jedoch beide Auflageflächen 4 mit jeweils einem Übertragungselement 3 und einem Messelement 2 ausgerüstet. Durch den Einsatz von zwei Messelementen 2 wird eine höhere Empfindlichkeit erreicht. Zudem kann dadurch eine Beschleunigungskompensation einer Messung in Richtung der Dehnung resp. Stauchung erreicht werden.

Weiterhin ist im Ausführungsbeispiel der Fig. 2 eine Elektronik-Komponente 13 im Gehäuse 1 integriert, welche in der Verkabelung 5 vor dem Stecker 6 zwischengeschaltet ist. Sie dient beispielsweise als Signalvorverarbeitung, insbesondere als Vorverstärker von Messsignalen.

Solche Dehnungssensoren nach Fig. 1 oder 2 sind mit ein oder zwei Messelementen 2 sowie mit oder ohne Elektronik 13 auf dem Markt.

In Gegensatz zu Fig. 1 sind in der Ausführung der Fig. 2 die Übertragungselemente 3 aber nicht im Gehäuse 1 eingeschweisst. Stattdessen sind die Messelemente 2, die Übertragungselemente 3, die Verkabelungen 5 und allenfalls die Elektronik 13 mit einem Kunststoffguss 11 in einem günstigen Herstellprozess im Gehäuse 1 eingegossen.

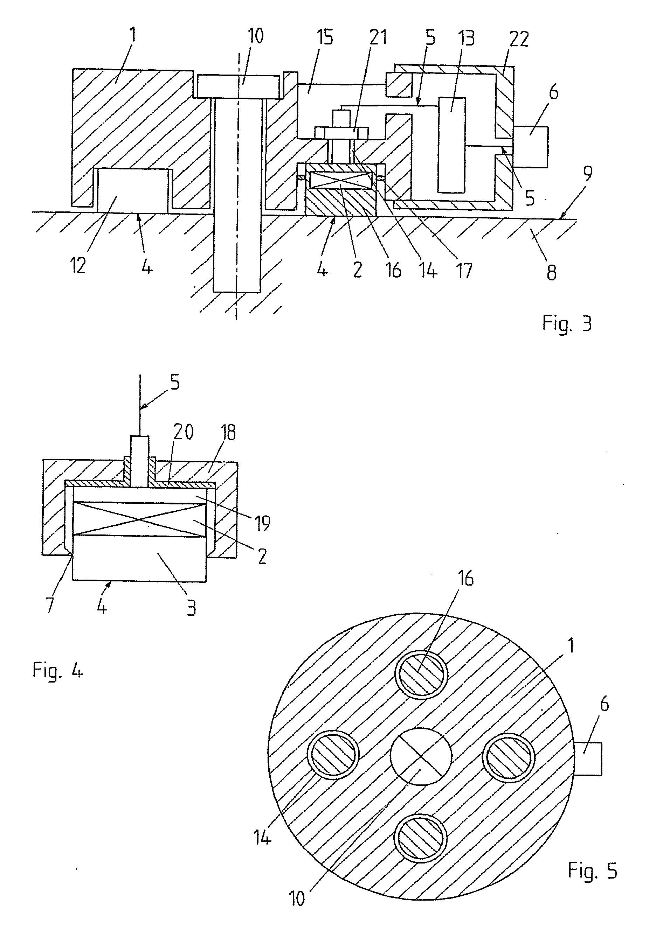

Fig. 3 zeigt einen Querschnitt durch einen erfindungsgemässen Dehnungssensor in schematischer Darstellung. Alle Bezugszeichen entsprechen denen der anderen Figuren. Dieser Dehnungssensor weist wiederum ein Gehäuse 1, eine Befestigung 10, zwei Auflageflächen 4 sowie mindestens einen Übertragungskörper 3 und ein Messelement 2 auf, sowie eine Verkabelung 5 von jedem Messelement 2 zu einem Stecker 6. Optional kann im Gehäuse 1 zusätzlich eine Elektronik 13 in der Verkabelung 5 angeschlossen sein zur Signalvorverarbeitung.

In dieser erfindungsgemässen Ausführungsform ist jedes Messelement 2 zusammen mit dem Übertragungselement 3 in einem Modul 16 vormontiert.

In Fig. 4 ist ein solches Modul 16 in schematischer Darstellung im Querschnitt dargestellt. Es umfasst ein Modulgehäuse 18 mit einer Aussparung, in dem das Messelement 2 und das Übertragungselement 3 mindestens teilweise eingebracht ist. Auf der dem Übertragungselement 3 gegenüberliegenden Seite des Messelementes 2 kann zudem eine Elektrode oder ein Anschlagselement 19 angeordnet sein. Dieses ist isoliert zum Modulgehäuse 18 angebracht, indem eine Isolation 20 zwischen dem Modulgehäuse 18 und der Elektrode 19 mit der Verkabelung 5 angebracht ist. Das Messelement 2 ist im Modul 16 unter Vorspannung und im Bereich des Übertragungsementes 3 dicht gegenüber der Umwelt untergebracht. Dies kann beispielsweise dadurch erreicht werden, in dem das Übertragungselement 3 unter Vorspannung im Modulgehäuse 18 an einer Schweissstelle 7 verschweisst wird. Da solche Module universell einsetzbar sind bei verschiedenen Dehnungssensoren, sind keine Spezialanfertigungen für kleine Stückzahlen erforderlich. Dadurch ist die Produktion für solche Module preisgünstig.

Die Verkabelung 5 führt vom Messelement 2 aus einer dafür im Modulgehäuse 18 vorgesehenen Öffnung heraus und kann an einem gewünschten Stecker 6 oder an einer Elektronik 13 angeschlossen werden. Die Öffnung im Modulgehäuse 18 für die Verkabelung 5 kann ebenfalls abgedichtet werden. Für die meisten Anwendungen ist dies aber nicht notwendig.

In der Fig. 3 ist ein solches Modul 16 in einer dafür vorgesehenen Aussparung 14 im Gehäuse 1 untergebracht. Diese Aussparung 14 verfügt über einen Kanal für die Durchführung der Verkabelung 5 bis zur Elektronik 13 oder bis zum Stecker 6.

Die Montage des Moduls 16 kann auf verschiedene dem Fachmann bekannte Arten erreicht werden. Wichtig bei der Montage ist allerdings, dass die Öffnung der Aussparung 14 dicht verschlossen ist. Dies kann beispielsweise durch sehr plane Auflageflächen zwischen dem Modul 16 und dem Gehäuses 1 erreicht werden oder durch eine Dichtung 17 zwischen diesen beiden Komponenten.

Die Montage des Moduls 16 selbst am Gehäuse 1 muss lediglich so fest sein, dass sie den Transport und die Montage übersteht. Im eingebauten Zustand wirken etwa 10'000 N durch die Befestigung 10 zwischen Gehäuse 1 und Oberfläche 9, sodass das Modul 16 automatisch gesichert ist. Die erforderliche Montage kann beispielsweise durch einen Stift und eine Mutter 21, einen Splint oder durch ein Äquivalent erreicht werden, wobei die Montage in diesem Fall von einer anderen Aussparung 15 im Gehäuse 1 für die Befestigung des Moduls 16 erfolgt. Die Öffnung dieser Aussparung 15 kann beispielsweise durch einen Kunststoffguss oder durch eine dichte Abdeckung verschlossen werden.

Alternativ dazu kann das Modul 16 auch am Gehäuse 1 mit einem Splint, einer Bride, einer Klemme oder durch Heften befestigt werden, insbesondere angeschraubt, geklemmt, angeleimt oder mit Schweisspunkten angeheftet. Dem Fachmann sind dafür viele Techniken bekannt.

Die Elektronik 13 kann in einem dafür vorgesehenen Raum im Gehäuse 1 untergebracht sein, der durch eine Hülse 22 am Rande des Gehäuses 1 geschaffen wird, wobei an der Hülse 22 der Stecker 6 angebracht ist. Andernfalls kann die Elektronik 13 auch in einer weiteren Aussparung am Gehäuse 1 untergebracht sein.

Die zweite Auflagefläche 4 kann ebenfalls, wie beim Stand der Technik, durch einen Dummy 12, wie in der Figur 3 dargestellt, oder durch ein weiteres Modul 16 mit einem Messelement 2 gebildet werden, analog der Fig. 2. Vorteilhafterweise werden Gehäuse 1 standardmässig für zwei Module 16 vorgesehen, wobei dann je nach Bedarf ein Modul 16 und ein Dummy 12 oder zwei Module 16 eingebaut werden. Eine Nachrüsten durch Austauschen des Dummys 12 durch ein weiteres Modul 16 ist somit leicht möglich.

Eine weitere erfindungsgemässe Anordnung ist in der Fig. 5 als schematische Darstellung in Aufsicht eines Dehnungssensors mit vier Messelementen 2 dargestellt. Es zeigt ein Gehäuse 1, in diesem Fall in einer runden Ausführung, umfassend eine mittig angeordnete Befestigung 10 und vier in meinem Kreis um die Befestigung 10 herum angeordnete Aussparungen 14 zum Einsetzen von Modulen 16 sowie einen Stecker 6. Der Vorteil einer solchen Anordnung besteht darin, dass entsprechend bis zu vier Modulen verwendet werden können, wodurch die Dehnung in zwei Komponenten gemessen werden kann und die Beschleunigung entsprechend auch in zwei Richtungen kompensiert werden kann. Dies macht den Sensor unempfindlich gegenüber Temperaturschwankungen.

Der erfindungsgemässe Dehnungssensor kann auf einfache Weise masseisoliert gefertigt werden, indem ein masseisoliertes Modul 16 eingesetzt wird. Dazu muss der Innenaufbau des Moduls 16 derart geändert werden, dass keine der beidseitigen Elektroden des Messelementes 2 direkten oder indirekten elektrischen Kontakt zum Modulgehäuse 18 oder zum Übertragungselement 3 aufweist. In diesem Fall weist die Verkabelung 5 zwei isolierte Leitungen auf.

Ein weiterer Vorteil eines solchen erfindungsgemässen Dehnungssensors unter Verwendung von Modulen 16 besteht darin, dass die Module 16 bei Bedarf, beispielsweise zur Reparatur, ausgetauscht werden können. Zu bemerken ist, dass, entsprechend der bekannten Modelle, auch die erfindungsgemässen Anordnungen mit einem, zwei oder vier Modulen 16 und mit oder ohne Elektronik 13, sowie in allen Kombinationen davon, herstellbar sind.

Durch die universelle Verwendbarkeit dieser kleinen, kompakten, Module 16 müssen nur noch einer oder wenige verschiedene Typen solcher Module hergestellt werden. Durch die höhere Stückzahl dieser Module werden die Herstellungskosten entsprechend geringer, was sich auch auf die Kosten und Preise der Dehnungssensoren auswirkt.

### Bezugszeichenliste

- 1: Gehäuse
- 2: Messelement
- 3: Übertragungselement
- 4: Auflagefläche
- 5: Verkabelung
- 6: Stecker
- 7: Schweissstelle
- 8: Bauteil
- 9: Oberfläche des Bauteils
- 10: Befestigung
- 11: Guss (Kunststoff)
- 12: Dummy
- 13: Elektronik
- 14: Aussparung im Gehäuse
- 15: Aussparung für Befestigung des Moduls
- 16: Modul
- 17: Dichtung
- 18: Modulgehäuse
- 19: Elektrode, Anschlagselement
- 20: Isolation
- 21: Stift und Mutter oder Äquivalent
- 22: Hülse

## Patentansprüche

1. Dehnungssensor zum Messen von Dehnungen und Stauchungen an einer Oberfläche 9 eines Bauteils 8, umfassend ein Gehäuse 1 mit einer Befestigung 10 an die zu messende Oberfläche 9, einen Stecker 6 für die Kontaktierung einer Messleitung, mindestens zwei Auflageflächen 4 zum festen Aufliegen des Gehäuses an der zu messenden Oberfläche 9, wobei mindestens eine der Auflageflächen 4 hinter einem Übertragungselement 3 mit einem Messelement zum Messen von Schubkräften ausgerüstet ist, welches mit Verkabelungen 5 zum Stecker 6 verbunden ist, **dadurch gekennzeichnet, dass** mindestens ein Messelement 2 zusammen mit einem eine einzige Auflagefläche 4 umfassenden Übertragungselement 3 in einem Modul 16 vormontiert und das Messelement 2 im Modul 16 dicht eingeschossen ist.

2. Dehnungssensor nach Anspruch 1, **dadurch gekennzeichnet, dass** mindestens eines der Module 16 lösbar am Gehäuse 1 angebracht ist.

3. Dehnungssensor nach einem der vorhergehenden Ansprüche, **dadurch gekennzeichnet, dass** das Gehäuse 1 mindestens eine erste Aussparung 14 zum Einfügen eines Moduls 16 aufweist.

4. Dehnungssensor nach Anspruch 3, **dadurch gekennzeichnet, dass** das Gehäuse 1 mindestens eine zweite Aussparung 15 zur Befestigung des Moduls 16 aufweist.

5. Dehnungssensor nach einem der vorhergehenden Ansprüche, **dadurch gekennzeichnet, dass** das Modul 16 am Gehäuse 1 angeschraubt, geklemmt, angeleimt oder mit Schweisspunkten angeheftet ist.

6. Dehnungssensor nach einem der Ansprüche 3, 4 oder 5 mit Rückbezug auf Anspruch 3, **dadurch gekennzeichnet, dass** das Modul 16 dichtend zur Aussparung 14 angebracht ist.

7. Dehnungssensor nach Anspruch 6, **dadurch gekennzeichnet, dass** die Dichtung mittels einem O-Ring 17, einem Kleber oder einer planen Fläche erzielt ist.

8. Dehnungssensor nach einem der Ansprüche 4 bis 7 unter Rückbezug auf Anspruch 4, **dadurch gekennzeichnet, dass** die zweite Aussparung 15 dicht abgeschlossen ist.

9. Dehnungssensor nach einem der vorhergehenden Ansprüche, **dadurch gekennzeichnet, dass** mindestens zwei der Auflageflächen 4 mit Messelementen 2 zum Messen von Schubkräften mit daran angebrachten Verkabelungen 5 zum Stecker 6 ausgerüstet sind.

10. Dehnungssensor nach Anspruch 9, **dadurch gekennzeichnet, dass** der Sensor in Richtung der Dehnung beschleunigungskompensiert ist.

11. Dehnungssensor nach einem der vorhergehenden Ansprüche, **gekennzeichnet durch** mindestens vier Auflageflächen 4 am Gehäuse 1 zum festen Aufliegen an der zu messenden Oberfläche 9, wobei jede der Auflageflächen 4 mit einem Messelement 2 zum Messen von Schubkräften mit daran angebrachten Verkabelungen 5 zum Stecker 6 verbunden ist.

12. Dehnungssensor nach einem der vorhergehenden Ansprüche, **dadurch gekennzeichnet, dass** im Gehäuse 1 zusätzlich Elektronik 13 für eine Signalvorverarbeitung untergebracht ist.

13. Dehnungssensor nach einem der vorhergehenden Ansprüche, **dadurch gekennzeichnet, dass** der Sensor masseisoliert ist.

## Claims

1. A strain gauge for measuring elongations and compressions at a surface 9 of a component 8, said strain gauge comprising a housing 1 having a fixation 10 to the surface 9 to be measured, a connector 6 for contacting a measuring cable, at least two support surfaces 4 for securely bearing the housing at the surface 9 to be measured wherein at least one of the support surfaces 4 is provided, behind a transduction element 3, with a measuring element 2 for measuring shearing forces connected by means of cables 5 to the connector 6 **characterized in that** at least one measuring element 2 is pre-assembled together with a transduction element 3 comprising a single support surface 4 into a module 16 and that the measuring element 2 is tightly sealed within the module 16.

2. A strain gauge according to claim 1 **characterized in that** at least one of the modules 16 is detachably attached to the housing 1.

3. A strain gauge according to any of the preceding claims **characterized in that** the housing 1 has at least one recess 14 for the insertion of a module 16.

4. A strain gauge according to claim 3 **characterized in that** the housing 1 has at least a second recess 15 for the attachment of the module 16.

5. A strain gauge according to any of the preceding claims **characterized in that** the module 16 is screwed, clamped, glued or attached by means of welding spots to the housing 1.

6. A strain gauge according to any of the claims 3, 4, or 5 referring to claim 3 **characterized in that** the module 16 is sealingly attached to the recess 14.

7. A strain gauge according to claim 6 **characterized in that** the seal is achieved by means of an O ring 17, an adhesive or a planar surface.

8. A strain gauge according to any of the claims 4 to 7 referring to claim 4 **characterized in that** the second recess 15 is tightly sealed.

9. A strain gauge according to any of the preceding claims **characterized in that** at least two of the support surfaces 4 are provided with measuring elements 2 for measuring shearing forces together with cables 5 attached thereto leading to the connector 6.

10. A strain gauge according to claim 9 **characterized in that** the sensor is acceleration-compensated in elongation direction.

11. A strain gauge according to any of the preceding claims **characterized by** at least four support surfaces 4 at the housing 1 for securely bearing on the surface 9 to be measured wherein each of the support surfaces 4 is connected to a measuring element 2 for measuring shearing forces together with cables 5 attached thereto leading to the connector 6.

12. A strain gauge according to any of the preceding claims **characterized in that** the housing 1 additionally accommodates electronics 13 for signal pre-processing.

13. A strain gauge according to any of the preceding claims **characterized in that** the sensor is ground-insulated.

## Revendications

1. Un capteur d'allongement pour la mesure des allongements et des compressions à une surface 9 d'un élément 8, capteur comprenant un boîtier 1 avec un fixage 10 à la surface 9 à mesurer, un connecteur 6 pour contacter une ligne de mesure, au moins deux surfaces d'appui 4 de sorte que le boîtier repose fermement sur la surface 9 à mesurer dans lequel au moins une de ces surfaces d'appui 4 est équipée, arrière d'un élément de transduction 3, avec un élément de mesure 2 pour mesurer des forces de poussée connecté par l'intermédiaire de lignes 5 au connecteur 6 **caractérisé en ce qu'**au moins un élément de mesure 2 a été pre-assemblé conjointement avec un élément de transduction 3 comprenant une seule surface d'appui 4 dans un module 16 et **en ce que** l'élément de mesure 2 est contenu hermétiquement dans le module 16.

2. Un capteur d'allongement selon la revendication 1 **caractérisé en ce qu'**au moins un de ces modules 16 est relié au boîtier 1 de manière détachable.

3. Un capteur d'allongement selon une des revendications précédentes **caractérisé en ce que** le boîtier 1 dispose d'au moins un évidement 14 destiné à la insertion d'un module 16.

4. Un capteur d'allongement selon la revendication 3 **caractérisé en ce que** le boîtier 1 dispose d'au moins un deuxième évidement 15 destiné à la fixation du module 16.

5. Un capteur d'allongement selon une des revendications précédentes **caractérisé en ce que** le module 16 est vissé, serré, collé ou relié par l'intermédiaire de points de soudage au boîtier 1.

6. Un capteur d'allongement selon une des revendications 3, 4 ou 5 en se préférant à la revendication 3 **caractérisé en ce que** le module 16 est attaché au évidement 14 en étanchéifiant celui-ci.

7. Un capteur d'allongement selon la revendication 6 **caractérisé en ce que** l'étanchement est réalisé par l'intermédiaire d'un joint torique 17, d'un adhésif ou d'une surface planaire.

8. Un capteur d'allongement selon une des revendications 4 à 7 en se référant à la revendication 4 **caractérisé en ce que** le deuxième évidement 15 est étanchéifié hermétiquement.

9. Un capteur d'allongement selon une des revendications précédentes **caractérisé en ce qu'**au moins deux des surfaces d'appui 4 sont équipées d'éléments de mesure 2 pour mesurer des forces de poussée avec des lignes 5 pour contacter le connecteur 6 attachées à ceux-ci.

10. Un capteur d'allongement selon la revendication 9 **caractérisé en ce que** le capteur est un capteur à compensation d'accélération en direction d'élongation.

11. Un capteur d'allongement selon une des revendications précédentes **caractérisé en ce qu'**il dispose d'au moins quatre surfaces d'appui 4 au boîtier 1 de sorte que le boîtier repose fermement sur la surface 9 à mesurer dans lequel chaque surface d'appui 4 est connectée à un élément de mesure 2 pour mesurer des forces de poussée avec des lignes 5 pour contacter le connecteur 6 attachées à ceux-ci.

12. Un capteur d'allongement selon une des revendications précédentes **caractérisé en ce que** le boîtier 1 comporte en outre la électronique 13 pour la prétraitement des signaux.

13. Un capteur d'allongement selon une des revendications précédentes **caractérisé en ce que** le capteur est mis à la terre.
